# EUROPÄISCHE PATENTSCHRIFT

(11) **EP 2 269 844 B1**
(45) Veröffentlichungstag und Bekanntmachung des Hinweises auf die Patenterteilung: **02.10.2013**
(21) Anmeldenummer: 10450113.5
(22) Anmeldetag: 02.07.2010
(51) Int. Cl.: B60D 1/06

(54) **Zugöse**
Towing eye
Attelage

(30) Priorität: 03.07.2009 AT 10412009; 09.11.2009 AT 17722009
(43) Veröffentlichungstag der Anmeldung: 05.01.2011
(73) Patentinhaber: Scharmüller, Josef, 4892 Fornach (AT); Scharmüller, Josef, jun., 4892 Fornach (AT)
(72) Erfinder: Scharmüller, Josef, 4892 Fornach (AT); Scharmüller, Josef, 4892 Fornach (AT); Scharmüller, Christine, 4892 Fornach (AT)
(74) Vertreter: Gibler & Poth Patentanwälte OG

(56) Entgegenhaltungen:
- WO-A1-99/65714
- DE-U1- 20 116 706
- DE-U1-202004 013 345
- US-A- 4 545 596

## Beschreibung

Die Erfindung betrifft eine Zugöse gemäß dem Oberbegriff des Patentanspruches 1.

Es sind derartige Zugösen bekannt, welche an Anhängern und/oder Anbaugeräten für Zugfahrzeuge befestigt sind, zur Verbindung des Anhängers bzw. des Anbaugeräts mit einem Zugfahrzeug, und Übertragung von Zug- und/oder Druckkräften. Derartige Zugösen weisen eine randoffene Kupplungspfanne zur Aufnahme einer gegengleichen Kupplungskugel auf, wobei die Kupplungspfanne eine teilsphärische Innenfläche mit einem kreisförmig umlaufenden Rand aufweisen. Derartige Zugösen weisen den Nachteil auf, dass ein Anhänger nur sehr ungenügend gegen Kippen gesichert ist.

Aus der WO 99/65714 A1 ist eine Zugkupplung mit einer Kupplungspfanne und einer Kupplungskugel bekannt, wobei weist die Kupplungspfanne eine Ausnehmung aufweist. Aus der DE 2004 013345 U1 ist eine Anhängerkupplung mit einer Kupplungskugel und einem Niederhalter bekannt, welcher eine Kupplungspfanne in einer Verriegelungsposition gegenüber der Kupplungskugel fixiert,

Aus der US 4 545 596 A ist eine Anhängerkupplung umfassend eine Kupplungskugel und einer zweiteilige Kupplungspfanne bekannt, wobei die Kupplungspfanne einen geschwungenen Rand aufweist.

Aus der DE 201 16 706 U1 ist eine Zugkugelkupplung mit einer Kugelkalotte eines Anhängers an eine Zugkugel eines Fahrzeuges bekannt, mit einer Stabilisierungseinrichtung zur Verminderung von Schlingerbewegungen des Anhängers.

Aufgabe der Erfindung ist es daher eine Zugöse der eingangs genannten Art anzugeben, mit welcher die genannten Nachteile vermieden werden können, mit welcher die Kippstabilität eines Hängers verbessert werden kann, ohne den Rampenwinkel einer Kombination aus Zugfahrzeug und Hänger zu verringern.

Erfindungsgemäß wird dies durch die Merkmale des Patentanspruches 1 erreicht.

Dadurch kann bei einer Kombination aus einem Zugfahrzeug und einem Hänger erreicht werden, dass diese problemlos große Rampenwinkel, vorzugsweise große Steigungen und große Gefälle, bewältigen kann, und gleichzeitig der Hänger bzw. das Anbaugerät eine hohe Kippstabilität aufweist. Der Hänger bzw. das Anbaugerät kann dadurch vom Zugfahrzeug gehalten werden. Dadurch wird auch ein Taumeln bzw. Schaukeln um eine Längachse des Hängers verhindert. Dadurch können Unfälle, welche durch eine mangelnde Kippstabilität des Hängers verursacht sind, weitestgehend verhindert werden.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung wird unter Bezugnahme auf die beigeschlossenen Zeichnungen, in welchen eine lediglich bevorzugte Ausführungsform beispielhaft dargestellt ist, näher beschrieben. Dabei zeigt:
Fig. 1 die bevorzugte Ausführungsform einer erfindungsgemäßen Zugöse in einer Untenansicht;
Fig. 2 die Zugöse nach Fig. 1 im Aufriss;
Fig. 3 die Zugöse nach Fig. 1 im Seitenriss;
Fig. 4 die Zugöse nach Fig. 1 im Grundriss;
Fig. 5 die Zugöse nach Fig. 1 in einer axonometrischen Ansicht;
Fig. 6 die Zugöse nach Fig. 1 mit zusätzlichem Niederhalter und mit einer in dieser Zugöse in einer ersten Position angeordneten Kupplungskugel im Aufriss;
Fig. 7 eine Zugöse nach Fig. 6 im Aufriss mit der Kupplungskugel in zweiter Position;
Fig. 8 die Zugöse nach Fig. 6 im Seitenriss mit der Kupplungskugel in dritter Position;
Fig. 9 die Zugöse nach Fig. 6 im Aufriss mit Schnittansicht des Niederhalters;
Fig. 10 die Zugöse nach Fig. 6 im Aufriss und Schnittansicht;
Fig. 11 die Zugöse nach Fig. 6 in einer ersten axonometrischen Explosionsansicht; und
Fig. 12 die Zugöse nach Fig. 6 in einer zweiten axonometrischen Explosionsansicht.

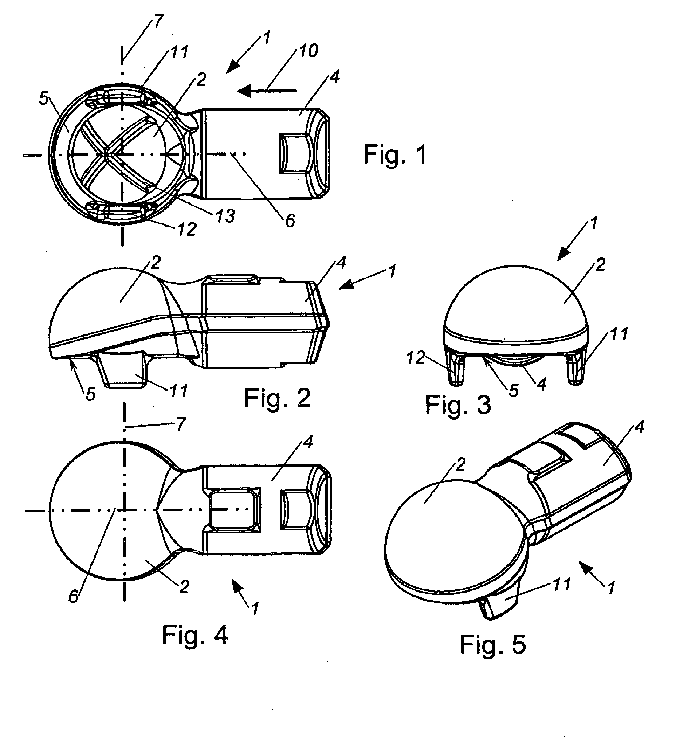

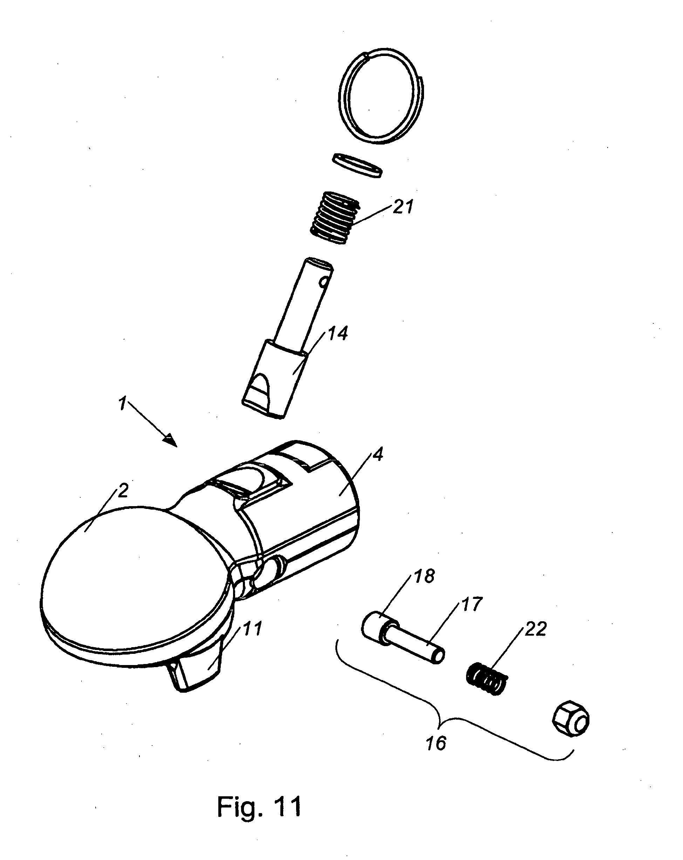

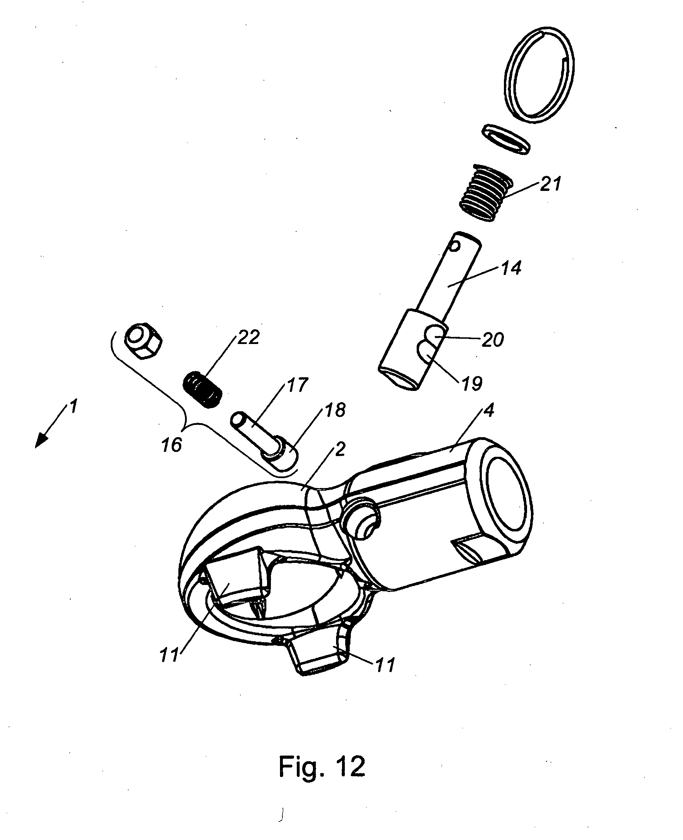

Die Fig. 1 bis 12 zeigen eine Zugöse 1 mit einer randoffenen Kupplungspfanne 2 zur Aufnahme einer gegengleichen Kupplungskugel 3, wobei die Kupplungspfanne 2 mit einem Kupplungsarm 4 verbunden ist, wobei ein Rand 5 der randoffenen Kupplungspfanne 2 derart ausgebildet ist, dass eine in dieser angeordnete Kupplungskugel 3 in wenigstens einer ersten Schwenkebene 6 in einem ersten Schwenkbereich 8 bewegbar ist, und in wenigstens einer - von der ersten Schwenkebene 6 unterschiedlichen - zweiten Schwenkebene 7 in einem zweiten Schwenkbereich 9 bewegbar ist, und wobei der erste Schwenkbereich 8 größer ist als der zweite Schwenkbereich 9.

Dadurch kann bei einer Kombination aus einem Zugfahrzeug und einem Hänger erreicht werden, dass diese problemlos große Rampenwinkel, vorzugsweise große Steigungen und große Gefälle, bewältigen kann, und gleichzeitig der Hänger bzw. das Anbaugerät eine hohe Kippstabilität aufweist. Der Hänger bzw. das Anbaugerät kann dadurch vom Zugfahrzeug gehalten werden. Dadurch wird auch ein Taumeln bzw. Schaukeln um eine Längsachse des Hängers verhindert. Dadurch können Unfälle, welche durch eine mangelnde Kippstabilität des Hängers verursacht sind, weitestgehend verhindert werden.

Erfindungsgemäße Zugösen 1 sind zur Anordnung an einem Zugelement eines Anhängers, Hängers und/oder eines Anbaugeräts vorgesehen bzw. ausgebildet, welcher Anhänger und/oder welches Anbaugerät zur Verbindung mit einem Zugfahrzeug, insbesondere einem Kraftfahrzeug, wie etwa einem Lastkraftwagen oder einem Traktor, vorgesehen bzw. ausgebildet ist. Das Zugelement ist bevorzugt als Deichsel und/oder Zugstange ausgebildet. Die Zugöse 1 weist eine randoffene Kupplungspfanne 2 auf, welche mit einem Kupplungsarm 4 verbunden ist, wobei bevorzugt vorgesehen ist, dass der Kupplungsarm 4 mit der randoffenen Kupplungspfanne 2 einstückig ausgebildet ist. Der Kupplungsarm 4 ist dazu vorgesehen mit dem Zugelement 1 verbunden zu werden. Hiezu weist der Kupplungsarm 4 bevorzugt eine Aufnahme für wenigstens Teile des Zugelements 1 auf, und/oder Aufnahmen für Verbindungsmittel, wie etwa Schrauben oder Nieten. Bevorzugt ist vorgesehen, dass wenigstens die Kupplungspfanne 2 umfassend wenigstens einem Gusswerkstoff, vorzugsweise einem Metallgusswerkstoff, insbesondere Stahlguss, gebildet ist, wobei vorgesehen sein kann, dass weiters auch der Kupplungsarm 4 als Gussteil, vorzugsweise Metallgussteil, insbesondere Stahlgussteil, ausgebildet ist. Besonders bevorzugt sind die Kupplungspfanne 2 und der Kupplungsarm 4 einstückig ausgebildet.

Die randoffene Kupplungspfanne 2 ist zur Aufnahme einer gegengleichen Kupplungskugel 3 vorgesehen, und weist wenigstens bereichsweise teilsphärische Innenkonturen auf, welche im Wesentlichen gegengleich zu den Außenkonturen der Kupplungskugel 3 ausgebildet sind. In der in Fig. 1 dargestellten Unteransicht der bevorzugten Ausführungsform einer erfindungsgemäßen Zugöse 1 ist eine kreuzförmige Struktur 13 erkennbar. Dabei ist bevorzugt vorgesehen, dass wenigstens diese kreuzförmige Struktur 13 besagte teilsphärische Innenkonturen aufweist.

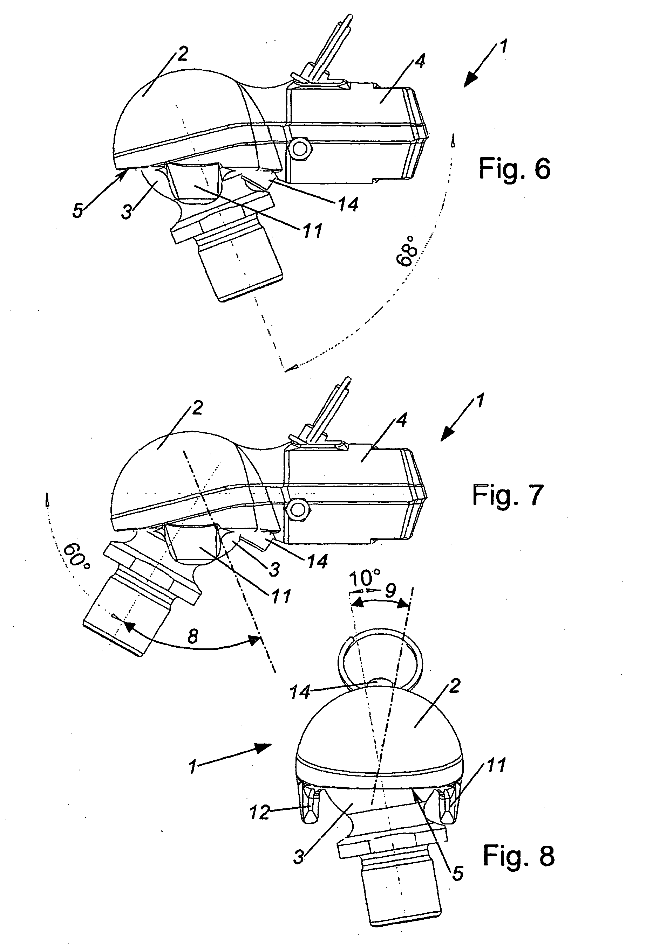

Die Fig. 6, 7 und 8 zeigen eine bevorzugte Ausführungsform einer erfindungsgemäßen Zugöse 1, wobei in der randoffenen Kupplungspfanne 2 eine Kupplungskugel 3 angeordnet ist.

Eine in der randoffenen Kupplungspfanne 2 angeordnete Kupplungskugel 3 ist gegenüber der Kupplungspfanne 2 bewegbar bzw. verschwenkbar. Der Rand 5 der randoffenen Kupplungspfanne 2 ist dabei derart ausgebildet, dass eine in dieser angeordnete Kupplungskugel 3 in wenigstens einer ersten Schwenkebene 6 in einem ersten Schwenkbereich 8 bewegbar ist, und in wenigstens einer - von der ersten Schwenkebene 6 unterschiedlichen - zweiten Schwenkebene 7 in einem zweiten Schwenkbereich 9 bewegbar ist. In den Fig. 1 und 4 sind besonders bevorzugte erste und zweite Schwenkebenen 6, 7 eingezeichnet, welche in diesen Ansichten jeweils projizierend auf die Darstellungsebene angeordnet sind. Die erste und die zweite Schwenkebene 6, 7 sind dabei in den den betreffenden Fig. 1 und 4 als "Strich-Doppelpunktlinien" eingezeichnet. Erfindungsgemäß ist vorgesehen, dass der erste Schwenkbereich 8 größer ist als der zweite Schwenkbereich 9.

Der erste und der zweite Schwenkbereich 8, 9 sind in den Fig. 7 und 8 eingezeichnet. Der erste bzw. zweite Schwenkbereich 8, 9 bezeichnet dabei bevorzugt den Winkelbereich bzw. den Kreisbogenbereich, innerhalb dessen eine in der Kupplungspfanne 2 angeordnete Kupplungskugel 3 bewegt bzw. verschwenkt werden kann. In Fig. 6 ist die Zugöse 1 mit einer in dieser Zugöse in einer ersten Position angeordneten Kupplungskugel 3 dargestellt, und in Fig. 7 ist dieselbe Kombination aus Zugöse 1 und Kupplungskugel 3 dargestellt, wobei sich die Kupplungskugel 3 in einer zweiten Position befindet. Die dargestellte erste und zweite Position der Kupplungskugel 3 markieren dabei die jeweils möglichen Endpunkte des ersten Schwenkbereichs 8. Die eingetragenen absoluten Winkelbeträge sind vorzugsweise nicht einschränkend und nur für diese spezielle Kombination gültig. Andere Kombinationen aus Kupplungskugel 3 und Zugöse 1 können einen hievon abweichenden ersten bzw. zweiten Schwenkbereich 8, 9 aufweisen.

In den Fig. 7 und 8 ist deutlich zu erkennen, dass der erste Schwenkbereich 8 wenigstens doppelt, vorzugsweise wenigstens dreimal, insbesondere wenigstens viermal, so groß ist als der zweite Schwenkbereich 9. Dadurch kann ein großer möglicher Rampenwinkel erzielt werden, sowie ein geringes Verkippen der Zugöse 1 gegenüber der Kupplungskugel 3.

Die absoluten ersten und zweiten Schwenkbereiche 8, 9 sind durch die Geometrie der Kupplungskugel 3 sowie der Kupplungspfanne 2 gegeben. Allerdings ist das Verhältnis des ersten Schwenkbereichs 8 zum zweiten Schwenkbereich 9 auch lediglich an der Kupplungspfanne 2 einfach und zweifelsfrei feststellbar. Zudem ist die Geometrie der Kupplungskugel 3 durch die Größe der Kupplungspfanne 2 weitestgehend vorgegeben.

In Fig. 1 ist weiters eine sog. Hauptzugrichtung 10 der Zugöse 1 eingezeichnet, welche im Wesentlichen parallel zu einer Längserstreckung des Kupplungsarms 4 angeordnet ist, bzw. mit dieser Längserstreckung des Kupplungsarms 4 zusammenfällt. Bevorzugt ist vorgesehen, dass die erste Schwenkebene 6 die Hauptzugrichtung 10 der Zugöse 1 umfasst, wie dies auch bei der in den Figuren dargestellten besonders bevorzugten Ausführungsform vorgesehen ist. Wie in den Fig. 1 und 4 weiters dargestellt, ist gemäß der besonders bevorzugten Ausführungsform der erfindungsgemäßen Zugöse 1 weiters vorgesehen, dass die zweite Schwenkebene 7 im Wesentlichen normal auf die erste Schwenkebene 6 angeordnet ist. Gemäß der, in den Fig. 1 bis 8 dargestellten, bevorzugten Ausführungsform der erfindungsgemäßen Zugöse 1 ist vorgesehen, dass zur Begrenzung des zweiten Schwenkbereichs 9 im Bezug auf den ersten Schwenkbereich 8 an dem Rand 5 der randoffenen Kupplungspfanne 2 und im Bereich der zweiten Schwenkebene 7 wenigstens ein erster Begrenzungsfortsatz 11 angeordnet ist. Wobei weiters bevorzugt vorgesehen ist, dass bevorzugt an dem Rand 5 der randoffenen Kupplungspfanne 2 und im Bereich der zweiten Schwenkebene 9 wenigstens ein - vom ersten Begrenzungsfortsatz 11 unterschiedlicher - zweiter Begrenzungsfortsatz 12 angeordnet ist. Dadurch ist eine einfache konstruktive Ausbildung der erfindungsgemäßen Zugöse 1 gegeben. Bevorzugt ist in diesem Zusammenhang vorgesehen, dass sich der erste und/oder der zweite Begrenzungsfortsatz 11, 12 aus Rand 5 als deutlich wahrnehmbarer, insbesondere sprunghafter, Fortsatz aus dem übrigen Rand 5 erhebt. Dabei ist insbesondere vorgesehen, dass sich bei einem Rand 5, welcher - bis auf den ersten und/oder zweiten Begrenzungsfortsatz 11, 12 - derart ausgebildet ist, dass dieser Rand 5 eine Ebene aufspannt, wie etwa auch der Rand 5 gemäß der in den

Figuren dargestellten bevorzugten Ausführungsform, der erste und/oder der zweite Begrenzungsfortsatz 11, 12 über bzw. unter diese Ebene erstrecken.

Neben der Begrenzung des zweiten Schwenkbereichs gewährleistet der wenigstens eine erste Begrenzungsfortsatz 11 weiters einen Schutz der Zugöse 1 beim Absetzen derselben auf einen Untergrund, da nicht der Rand der Kupplungspfanne 2 am Boden zum Liegen kommt, sondern lediglich der wenigstens eine erste Begrenzungsfortsatz 11. Dadurch kann auch eine Verunreinigung der Kupplungspfanne 2 verhindert bzw. zumindest vermindert werden, da unmittelbarer Bodenkontakt verhindert werden kann. Dies ist insbesondere in Kombination mit einem nachstehend weiters beschriebenen Niederhalter 14 vorteilhaft, da durch den wenigstens einen Begrenzungsfortsatz 11, 12 insbesondere auch die Verschmutzung der Mechanik des Niederhalters vermindert werden kann.

Dadurch kann weiters erreicht werden, dass bei einem Ablegen der Zugöse 1 auf weichem Untergrund, der wenigstens eine erste Begrenzungsfortsatz 11 in den Untergrund bzw. Boden gedrückt wird bzw. werden kann, wodurch eine Bremswirkung erzielt werden kann. Bevorzugt ist in diesem Zusammenhang vorgesehen, dass der erste und der zweite Begrenzungsfortsatz 11, 12 symmetrisch bezüglich der Hauptzurichtung 10 angeordnet sind. Erfindungsgemäß kann vorgesehen sein, dass eine weitere vorgebbare Anzahl an Begrenzungsfortsätzen 11, 12 an dem Rand 5 angeformt ist.

Der erste und/oder zweite Begrenzungsfortsatz 11, 12 sind gemäß der in den Figuren dargestellten besonders bevorzugten Ausführungsform als massive Metallgussteile ausgebildet, welche einen im Wesentlichen quaderförmigen Grundkörper mit abgeschrägten und/oder abgerundeten Stirnbereichen aufweisen. Gemäß einer weiteren bevorzugten Ausführungsform einer erfindungsgemäßen Zugöse 1 ist vorgesehen, dass der erste und/oder der zweite Begrenzungsfortsatz 11, 12 bügelförmig ausgebildet sind, wobei sowohl die Ausbildung des ersten und/oder zweiten Begrenzungsfortsatzes 11, 12 durch Biegen eines strangförmigen Metalls, etwa eines Drahtes, vorgesehen sein kann, als auch die Ausbildung der vorstehend beschriebenen und in den Figuren dargestellten Art, wobei Bereiche des ersten und/oder zweiten Begrenzungsfortsatzes 11, 12 Durchbrechungen aufweisen.

Es kann vorgesehen sein, dass der erste und zweite Begrenzungsfortsatz 11, 12 als separate Bauteile ausgebildet sind, welche mit der Kupplungspfanne 2 lösbar verbunden, etwa verschraubt, sind, wobei auch vorgesehen sein kann, dass der erste und/oder zweite Begrenzungsfortsatz 11, 12 an die randoffene Kupplungspfanne 2 geklemmt ist. Weiters kann eine zwar separate Ausbildung des ersten und zweiten Begrenzungsfortsatzes 11, 12 vorgesehen sein, wobei die Begrenzungsfortsätze 11, 12 nicht zerstörungsfrei trennbar an die randoffene Kupplungspfanne 2 angeformt sind, etwa mit dieser verschweißt sind. Bevorzugt ist jedoch vorgesehen, dass der erste und/oder der zweite Begrenzungsfortsatz 11, 12 einstückig an die randoffene Kupplungspfanne 2 angeformt sind, was eine besonders rationelle Fertigung ermöglicht, sowie eine besonders gute Kraftübertragung von den Begrenzungsfortsätzen auf die Kupplungspfanne 2.

Neben der Begrenzung des zweiten Schwenkbereichs 9 gewährleisten der erste und zweite Begrenzungsfortsatz 11, 12 weiters einen Schutz der Zugöse 1 beim Absetzen dieser auf einem Untergrund, da nicht der Rand 5 der Kupplungspfanne 2 am Boden zum Liegen kommt, sondern lediglich der erste und zweite Begrenzungsfortsatz 11, 12. Dadurch kann auch eine Verunreinigung der Kupplungspfanne 2 verhindert bzw. zumindest vermindert werden, da unmittelbarer Bodenkontakt verhindert werden kann. Dabei kann vorgesehen sein, an den der Kupplungspfanne 2 abgewandten Bereich der Begrenzungsfortsätze 11, 12 zusätzliche Bodenkontaktbereiche vorzusehen, welche beispielsweise aufgeraute Oberflächen aufweise oder welche zu einem teilweisen Abschleifen vorgesehen sind, ohne die erfindungsgemäße Funktion der Zugöse 1 zu mindern.

Die in den Fig. 6, 7, 8, 9, 10, 11 und 12 dargestellte Ausführungsform weist weiters einen sog. Niederhalter 14 auf, welcher dazu vorgesehen ist, ein unbeabsichtigtes Entfernen der Kupplungskugel 3 aus der randoffenen Kupplungspfanne 2 zu verhindern, bzw. zum Sichern einer Verbindung zwischen einer Kupplungspfanne 2 und einer in dieser angeordneten Kupplungskugel 3. Durch einen derartigen Niederhalter 14 kann ein unbeabsichtigtes Trennen der Kupplungskugel 3 von der Zugöse 1 verhindert werden. Dabei ist bevorzugt vorgesehen, dass der Niederhalter 14 von einer ersten Position, zum Einbringen der Kupplungskugel 3 in die Kupplungspfanne 2 oder zum Entfernen der Kupplungskugel 3 aus der Kupplungspfanne 2, in eine zweite Position, zum Sichern der Verbindung zwischen Kupplungspfanne 2 und Kupplungskugel 3, bewegbar ist. Hiebei ist bevorzugt vorgesehen, dass der Niederhalter 14 im Wesentlich geradlinig entlang einer Niederhalterverschieberichtung 15 verschiebbar ausgebildet und/oder gelagert ist. Alternativ hiezu kann vorgesehen sein, dass der Niederhalter 14 zufolge einer rotatorischen Bewegung bzw. einer aus Rotation und Translation überlagerten Bewegung von der ersten Position in die zweite Position verbringbar ist. In diesem Zusammenhang ist bevorzugt eine erste Feder 21 vorgesehen, welche den Niederhalter 14 in Richtung der zweiten Position des Niederhalters 14 beaufschlagt. Die erste Feder 21 drückt den Niederhalter daher in die zweite Position um eine allfällige Verbindung zwischen Zugöse und Kupplungskugel zu sichern, und stützt sich bevorzugt an einem Gehäuseteil der Zugöse 1 ab.

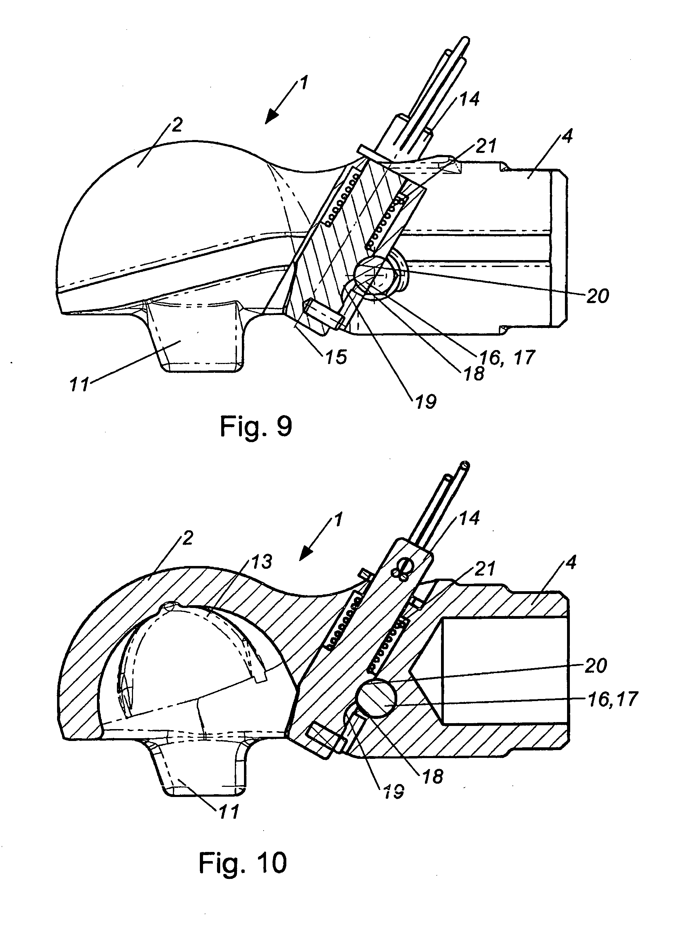

Um die Verbindung zwischen Kupplungskugel 3 und Zugöse 1 weiter zu sichern, ist gemäß der in den Fig. 9 bis 12 dargestellten besonders bevorzugten Ausführungsform vorgesehen, dass die Zugöse 1 wenigstens eine Arretierungsanordnung 16 aufweist, zum Arretieren des Niederhalters 14 der zweiten Position. Um das Einbringen der Kupplungskugel in die Kupplungspfanne 2 weiter zu vereinfachen, ist gemäß einer besonders bevorzugten Ausführungsform vorgesehen, dass die Zugöse 1 wenigstens eine Arretierungsanordnung 16 aufweist, zum Arretieren des Niederhalters 14 in der ersten Position, wobei besonders bevorzugte vorgesehen ist, dass die Arretierungsanordnung 16 ausgebildet ist, den Niederhalter 14 entweder in der ersten oder der zweiten Position zu fixieren. Durch die Möglichkeit den Niederhalter 14 in dessen ersten Position ist beim Verbindungsvorgang zwischen Zugöse 1 und Kupplungskugel 3 lediglich eine Hand für die Führung der Zugöse 1 erforderlich, wodurch eine zweite Hand für die Führung der Kupplungskugel 3 frei bleibt. Die Führung der Zugöse 1 wird hiebei durch den ersten und zweiten Begrenzungsfortsatz 11, 12 weiter unterstützt. Dadurch kann bei einem Einkuppelvorgang einer Kupplungskugel 3 in eine erfindungsgemäße Zugöse 1 größeres Augenmerk auf ein sich bewegendes Zugfahrzeug gelenkt werden, da das Zusammenführen von Zugöse 1 und Kupplungskugel 3 durch die Begrenzungsfortsätze 11, 12 im Sinne einer seitlichen Führung unterstützt wird. Dadurch kann die Unfallgefahr bei Kupplungsvorgängen mit schweren Zugmaschinen gesenkt werden. Erfindungsgemäß können unterschiedliche Ausbildungen einer Arretierungsanordnung 16 vorgesehen sein, welche die dargelegten Eigenschaften aufweisen. Bevorzugt ist, wie in den Figuren dargestellt, vorgesehen, dass die Arretierungsanordnung 16 einen Arretierungsstift 17 umfasst, zum Eingriff in wenigstens eine Arretierungsnut 19, 20 des Niederhalters 14. Dabei kann vorgesehen sein, dass der Niederhalter 14 eine erste oder eine zweite Arretierungsnut 19, 20 aufweist, je nachdem in welcher Position der Niederhalter 14 arretiert werden soll, bzw. dass der Niederhalter 14 eine erste Arretierungsnut 19, zur Arretierung des Niederhalters 14 in der ersten Position, und eine zweite Arretierungsnut 20, zur Arretierung des Niederhalters 14 in der zweiten Position, aufweist, wodurch eine vorteilhafte Arretierungsmöglichkeit sowohl in der ersten als auch der zweiten Position ermöglicht wird.

Der Arretierungsstift 17 ist gemäß der in den Figuren dargestellten besonders bevorzugten Ausführungsform als rotationssymmetrischer Körper ausgebildet, und weist an dessen einem Ende einen Arretierungsbereich 18 auf, welcher dazu vorgesehen ist, in die erste oder zweite Arretierungsnut 19, 20 einzugreifen. Der Arretierungsbereich 18 kann daher auch andere als die dargestellte zylindrische Form aufweisen, etwa mit dem Querschnitt eines vorgebbaren Polygons oder wenigstes einer Kegelschnittlinie, wobei vorgesehen ist, dass die erste oder zweite Arretierungsnut 19, 20 wenigstens Bereichsweise im Wesentlichen gegengleich zum Arretierungsbereich 18 ausgebildet sind. Bei erfindungsgemäßen Zugösen 1 ist dabei bevorzugt vorgesehen, dass - wenigstens im Gebrauch derselben - wenigstens ein Arretierungsbereich 18 des Arretierungsstifts 17 in einer ersten Lage des Arretierungsstifts 17 in der wenigstens einen Arretierungsnut 19, 20 angeordnet ist.

Zum Verschieben des Niederhalters 14 ist vorgesehen den Arretierungsbereich 18 mit der ersten oder zweiten Arretierungsnut 19, 20 außer Eingriff zu bringen. Bei der dargestellten besonders bevorzugten Ausführungsform ist hiebei vorgesehen, dass der Arretierungsstift 17 geradlinig entlang einer Arretierungsstiftverschieberichtung verschiebbar in der Zugöse 1 gelagert ist, und durch eine zweite Feder 22 in Richtung erster Lage des Arretierungsstifts 17 beaufschlagt ist. Die Arretierungsstiftverschieberichtung ist dabei vorzugsweise normal zur Niederhalterverschieberichtung 15 angeordnet. Durch Druck auf eine Seite der Arretierungsstifts 17 kann die Arretierung bzw. Fixierung des Niederhalters 14 wenigstens temporär gelöst werden. Zum Verbringen des Niederhalters 14 aus dessen zweite Position in dessen erste Position, ist vorgesehen den Niederhalter 14 - bei entriegeltem Arretierungsstift 17 - durch äußere Krafteinwirkung, etwa manuell, gegen den Druck der ersten Feder 21, zu bewegen. In der ersten Position kann der Niederhalter 14 arretiert werden. Nach erfolgreichem Zusammenführen von Kupplungskugel 3 und Zugöse 1 ist für ein sicheres Verriegeln lediglich das Verbringen des Arretierungsstifts 17 in die zweite Lage erforderlich, wodurch die Bewegung des Niederhalters 14 von der ersten in die zweite Position ermöglicht wird, und anschließend - durch Überführen des Arretierungsstifts 17 aus der zweiten Lage in die erste Lage durch die zweite Feder 22 - der Niederhalter 14 in der zweiten Position arretiert wird.

## Patentansprüche

1. Zugöse (1) mit einer randoffenen Kupplungspfanne (2) zur Aufnahme einer gegengleichen Kupplungskugel (3), wobei die Kupplungspfanne (2) mit einem Kupplungsarm (4) verbunden ist, wobei ein Rand (5) der randoffenen Kupplungspfanne (2) derart ausgebildet ist, dass eine in dieser angeordnete Kupplungskugel (3) in wenigstens einer ersten Schwenkebene (6), welche erste Schwenkebene (6) insbesondere eine Hauptzugrichtung (10) der Zugöse (1) umfasst, eine in einem ersten Schwenkbereich (8) bewegbar ist, und in wenigstens einer - von der ersten Schwenkebene (6) unterschiedlichen - zweiten Schwenkebene (7) in einem zweiten Schwenkbereich (9) bewegbar ist, und dass der erste Schwenkbereich (8) größer ist als der zweite Schwenkbereich (9), **dadurch gekennzeichnet, dass** an dem Rand (5) der randoffenen Kupplungspfanne (2) und im Bereich der zweiten Schwenkebene (7) wenigstens ein sich deutlich wahrnehmbar aus dem übrigen Rand (5) erhebender erster Begrenzungsfortsatz (11) angeordnet ist.

2. Zugöse (1) nach Anspruch 1, **dadurch gekennzeichnet, dass** die zweite Schwenkebene (7) im Wesentlichen normal auf die erste Schwenkebene (6) angeordnet ist.

3. Zugöse (1) nach Anspruch 1 oder 2, **dadurch gekennzeichnet, dass** an dem Rand (5) der randoffenen Kupplungspfanne (2) und im Bereich der zweiten Schwenkebene (9) wenigstens ein - vom ersten Begrenzungsfortsatz (11) unterschiedlicher - zweiter Begrenzungsfortsatz (12) angeordnet ist.

4. Zugöse (1) nach Anspruch 3, **dadurch gekennzeichnet, dass** der erste und der zweite Begrenzungsfortsatz (11, 12) symmetrisch bezüglich der Hauptzugrichtung (10) angeordnet sind.

5. Zugöse (1) nach Anspruch 3 oder 4, **dadurch gekennzeichnet, dass** der erste und/oder der zweite Begrenzungsfortsatz (11, 12) bügelförmig ausgebildet sind.

6. Zugöse (1) nach einem der Ansprüche 3 bis 5, **dadurch gekennzeichnet, dass** der erste und/oder der zweite Begrenzungsfortsatz (11, 12) lösbar mit der randoffenen Kupplungspfanne (2) verbunden sind.

7. Zugöse (1) nach einem der Ansprüche 3 bis 5, **dadurch gekennzeichnet, dass** der erste und/oder der zweite Begrenzungsfortsatz (11, 12) einstückig an die randoffene Kupplungspfanne (2) angeformt sind.

8. Zugöse (1) nach einem der Ansprüche 1 bis 7, **dadurch gekennzeichnet, dass** die Zugöse einen Niederhalter (14) aufweist, zum Sichern einer Verbindung zwischen einer Kupplungspfanne (2) und einer in dieser angeordneten Kupplungskugel (3).

9. Zugöse (1) nach Anspruch 8, **dadurch gekennzeichnet, dass** der Niederhalter (14) von einer ersten Position, zum Einbringen der Kupplungskugel (3) in die Kupplungspfanne (2) oder zum Entfernen der Kupplungskugel (3) aus der Kupplungspfanne (2), in eine zweite Position, zum Sichern der Verbindung zwischen Kupplungspfanne (2) und Kupplungskugel (3), bewegbar, insbesondere im Wesentlich geradlinig entlang einer Niederhalterverschieberichtung (15) verschiebbar, ist.

10. Zugöse (1) nach Anspruch 9, **dadurch gekennzeichnet, dass** die Zugöse wenigstens eine Arretierungsanordnung (16) aufweist, zum Arretieren des Niederhalters (14) entweder in der ersten Position oder der zweiten Position.

11. Zugöse (1) nach Anspruch 10, **dadurch gekennzeichnet, dass** die Arretierungsanordnung (16) einen Arretierungsstift (17) umfasst, zum Eingriff in wenigstens eine Arretierungsnut (19, 20) des Niederhalters (14).

12. Zugöse (1) nach Anspruch 11, **dadurch gekennzeichnet, dass** der Arretierungsstift (17) geradlinig entlang einer Arretierungsstiftverschieberichtung verschiebbar in der Zugöse (1) gelagert ist, und dass die Arretierungsstiftverschieberichtung vorzugsweise normal zur Niederhalterverschieberichtung (15) angeordnet ist.

13. Zugöse (1) nach Anspruch 11 oder 12, **dadurch gekennzeichnet, dass** wenigstens ein Arretierungsbereich (18) des Arretierungsstifts (17) in einer ersten Lage des Arretierungsstifts (17) in der wenigstens einen Arretierungsnut (19, 20) angeordnet ist.

14. Zugöse (1) nach Anspruch 11, 12 oder 13, **dadurch gekennzeichnet, dass** der Niederhalter (14) eine erste Arretierungsnut (19), zur Arretierung des Niederhalters (14) in der ersten Position, und eine zweite Arretierungsnut (20), zur Arretierung des Niederhalters (14) in der zweiten Position, aufweist.

15. Zugöse (1) nach einem der Ansprüche 9 bis 14, **dadurch gekennzeichnet, dass** der Niederhalter (14) durch eine erste Feder (21) in Richtung zweite Position des Niederhalters (14) beaufschlagt ist.

16. Zugöse (1) nach Anspruch 13, 14 oder 15, **dadurch gekennzeichnet, dass** der Arretierungsstift (17) durch eine zweite Feder (22) in Richtung erster Lage des Arretierungsstifts (17) beaufschlagt ist.

## Claims

1. A drawbar eye (1), comprising an open-ended hitch socket (3) for accommodating a diametrically opposed hitch ball (3), wherein the hitch socket (2) is connected to a hitch arm (4), wherein an edge (5) of the open-ended hitch socket (2) is arranged in such a way that a hitch ball (3) arranged therein is movable in at least one first pivot plane (6) in a first pivot range (8), which first pivot plane (6) especially comprises a main drawing direction (10) of the drawbar eye (1), and is movable in at least one second pivot plane (7) in a second pivot range (9), which second pivot plane (7) differs from the first pivot plane (6), and that the first pivot range (8) is larger than the second pivot range (9), **characterized in that** at least one first limiting protrusion (11) is arranged on the edge (5) of the open-ended hitch socket (2) and in the region of the second pivot plane (7), which limiting protrusion rises in a clearly perceivable manner from the remaining edge (5).

2. A drawbar eye (1) according to claim 1, **characterized in that** the second pivot plane (7) is arranged substantially normally to the first pivot plane (6).

3. A drawbar eye (1) according to claim 1 or 2, **characterized in that** at least one second limiting protrusion (12) is arranged on the edge (5) of the open-ended hitch socket (2) and in the region of the second pivot plane (9), which second limiting protrusion differs from the first limiting protrusion (11).

4. A drawbar eye (1) according to claim 3, **characterized in that** the first and the second limiting protrusion (11, 12) are arranged symmetrically with respect to the main drawing direction (10).

5. A drawbar eye (1) according to claim 3 or 4, **characterized in that** the first and/or second limiting protrusion (11, 12) arc arranged in a bow-shaped manner.

6. A drawbar eye (1) according to one of the claims 3 to 5, **characterized in that** the first and/or the second limiting protrusion (11, 12) are releasably connected to the open-ended hitch socket (2).

7. A drawbar eye (1) according to one of the claims 3 to 5, **characterized in that** the first and/or the second limiting protrusion (11, 12) are integrally formed on the open-ended hitch socket (2).

8. A drawbar eye (1) according to one of the claims 1 to 7, **characterized in that** the drawbar eye comprises a retainer (14) for securing a connection between a hitch socket (2) and a hitch ball (3) arranged therein.

9. A drawbar eye (1) according to claim 8, **characterized in that** the retainer (14) can be moved from a first position for introducing the hitch ball (3) into the hitch socket (2) or for removing the hitch ball (3) from the hitch socket (2) to a second position for securing the connection between the hitch socket (2) and the hitch ball (3), especially in a substantially straight line along the direction of retainer displacement (15).

10. A drawbar eye (1) according to claim 9, **characterized in that** the drawbar eye comprises at least one locking arrangement (16) for locking the retainer (14) either in the first position or the second position.

11. A drawbar eye (1) according to claim 10, **characterized in that** the locking arrangement (16) comprises a locking pin (17) for the engagement in at least one locking groove (19, 20) of the retainer (14).

12. A drawbar eye (1) according to claim 11, **characterized in that** the locking pin (17) is displaccably mounted in the drawbar eye (1) in a straight line along a displacement direction of the locking pin, and that the displacement direction of the locking pin is preferably arranged normally to the direction of displacement (15) of the retainer.

13. A drawbar eye (1) according to claim 11 or 12, **characterized in that** at least one locking range (18) of the locking pin (17) is arranged in a first position of the locking pin (17) in the at least one locking groove (19, 20).

14. A drawbar eye (1) according to claim 11, 12 or 13, **characterized in that** the retainer (14) comprises a first locking groove (19) for locking the retainer (14) in the first position and a second locking groove (20) for locking the retainer (14) in the second position.

15. A drawbar eye (1) according to one of the claims 9 to 14, **characterized in that** the retainer (14) is pressurized by a first spring (21) in the direction of the second position of the retainer (14).

16. A drawbar eye (1) according to claim 13, 14 or 15, **characterized in that** the locking pin (17) is pressurized by a second spring (22) in the direction of the first position of the locking pin (17).

## Revendications

1. Oeillet de traction (1) avec une chapc d'attelage (2) à bord ouvert pour recevoir une boule d'attelage (3) symétrique, la chape d'attelage (2) étant reliée à un timon d'attelage (4), un bord (5) de la chape d'attelage (2) à bord ouvert étant conformé de telle manière qu'une boule d'attelage (3) disposée dans celle-ci puisse bouger dans une première plage de pivotement (8) dans au moins un premier plan de pivotement (6), lequel premier plan de pivotement (6) inclut en particulier une direction principale de traction (10) de l'oeillet de traction (1), et dans au moins une deuxième plage de pivotement (9) dans un deuxième plan de pivotement (7) différent du premier plan de pivotement (6), la première plage de pivotement (8) étant plus grande que la deuxième plage de pivotement (9), **caractérisé en ce qu'**il est prévu sur le bord (5) de la chape d'attelage (2) à bord ouvert et au niveau du deuxième plan de pivotement (7) au moins une saillie de délimitation (11) qui dépasse de façon nettement perceptible du reste du bord (5).

2. Oeillet de traction (1) selon la revendication 1, **caractérisé en ce que** le deuxième plan de pivotement (7) est disposé de façon sensiblement perpendiculaire au premier plan de pivotement (6).

3. Oeillet de traction (1) selon la revendication 1 ou 2, **caractérisé en ce qu'**il est prévu sur le bord (5) de la chape d'attelage (2) à bord ouvert et au niveau du deuxième plan de pivotement (9) au moins une deuxième saillie de délimitation (12) différente de la première saillie de délimitation (11).

4. Oeillet de traction (1) selon la revendication 3, **caractérisé en ce que** la première saillie de délimitation et la deuxième (11, 12) sont disposées de façon symétrique par rapport au sens de traction principal (10).

5. Oeillet de traction (1) selon la revendication 3 ou 4, **caractérisé en ce que** la première saillie de délimitation et/ou la deuxième (11, 12) sont conformées en forme d'étrier.

6. Oeillet de traction (1) selon l'une des revendications 3 à 5, **caractérisé en ce que** la première saillie de délimitation et/ou la deuxième (11, 12) sont reliées de façon amovible avec la chape d'attelage (2) à bord ouvert.

7. Oeillet de traction (1) selon l'une des revendications 3 à 5, **caractérisé en ce que** la première saillie de délimitation et/ou la deuxième (11, 12) sont formées d'un seul tenant sur la chape d'attelage (2) à bord ouvert.

8. Oeillet de traction (1) selon l'une des revendications 1 à 7, **caractérisé en ce qu'**il présente un organe de maintien (14) pour sécuriser une liaison entre une chape d'attelage (2) et une boule d'attelage (3) disposée dans celle-ci.

9. Oeillet de traction (1) selon la revendication 8, **caractérisé en ce que** l'organe de maintien (14) peut être déplacé d'une première position, pour l'introduction de la boule d'attelage (3) dans la chape d'attelage (2) ou le retrait de la boule d'attelage (3) hors de la chape d'attelage (2), à une deuxième position, pour sécuriser la liaison entre la chape d'attelage (2) et la boule d'attelage (3), en particulier sensiblement en ligne droite le long d'une direction de déplacement de l'organe de maintien (15).

10. Oeillet de traction (1) selon la revendication 9, **caractérisé en ce qu'**il présente au moins un dispositif de blocage (16) pour bloquer l'organe de maintien (14) dans la première position ou dans la deuxième position.

11. Oeillet de traction (1) selon la revendication 10, **caractérisé en ce que** le dispositif de blocage (16) comprend une goupille de blocage (17) destinée à se mettre en prise dans au moins une gorge de blocage (19, 20) de l'organe de maintien (14).

12. Oeillet de traction (1) selon la revendication 11, **caractérisé en ce que** la goupille de blocage (17) est supportée dans l'oeillet de traction (1) de façon à pouvoir se déplacer en ligne droite le long d'une direction de déplacement de la goupille de blocage et **en ce que** la direction de déplacement de la goupille de blocage est de préférence disposée perpendiculairement à la direction de déplacement de l'organe de maintien (15).

13. Oeillet de traction (1) selon la revendication 11 ou 12, **caractérisé en ce qu'**au moins une zone de blocage (18) de la goupille de blocage (17) est disposée dans l'au moins une gorge de blocage (19, 20) dans une première position de la goupille de blocage (17).

14. Oeillet de traction (1) selon la revendication 11, 12 ou 13, **caractérisé en ce que** l'organe de maintien (14) présente une gorge de blocage (19) pour le blocage de l'organe de maintien (14) dans la première position et une deuxième gorge de blocage (20) pour le blocage de l'organe de maintien (14) dans la deuxième position.

15. Oeillet de traction (1) selon l'une des revendications 9 à 14, **caractérisé en ce que** l'organe de maintien (14) est contraint par un premier ressort (21) en direction de la deuxième position de l'organe de maintien (14).

16. Oeillet de traction (1) selon la revendication 13, 14 ou 15, **caractérisé en ce que** la goupille de blocage (17) est contrainte par un deuxième ressort (22) en direction de la première position de la goupille de blocage (17).
